# EUROPÄISCHE PATENTANMELDUNG

(11) **EP 0 748 809 A1**
(43) Veröffentlichungstag der Anmeldung: **18.12.1996**
(21) Anmeldenummer: 96109005.7
(22) Anmeldetag: 05.06.1996
(51) Int. Cl.: C07F 7/08, C07F 7/21, C08G 77/38, C08G 77/04

(54) **Kontinuierlicher thermischer Abbau von Organopolysiloxanen**

(30) Priorität: 08.06.1995 DE 19521009
(71) Anmelder: Wacker-Chemie GmbH, D-81737 München (DE)
(72) Erfinder: Stary, Fridolin, Dr., 84489 Burghausen (DE); Beisswenger, Harald, Dr., 84489 Burghausen (DE); Knies, Wolfgang, Dr., 84489 Burghausen (DE); Vogl, Günther, 84503 Altötting (DE); Scheler, Dietmar, 84547 Emmerting (DE)
(74) Vertreter: Fritz, Helmut, Dr.

(57) **Zusammenfassung**

In dem kontinuierlichen Verfahren zum thermischen Abbau von Organopolysiloxanen und Organopolysiloxane enthaltenden Polymeren unter Bildung von gasförmig anfallenden Produkten werden die Polymere in einer Wellenmaschine erhitzt.

## Beschreibung

Die vorliegende Erfindung betrifft ein kontinuierliches Verfahren zum thermischen Abbau von Organopolysiloxanen und Organopolysiloxan enthaltenden Polymeren, unter Bildung von flüchtigen Stoffen, die als Rohstoff eingesetzt werden können.

Der thermische Abbau von thermisch spaltbaren Polymeren, wie organische und siliciumorganische Kunststoffe, bei dem gasförmige Rohstoffe, wie Kohlenwasserstoffe und/oder cyclische Siloxane entstehen, wurde bisher bevorzugt in diskontinuierlich betriebenen Reaktoren durchgeführt, da die festen Rückstände dort leichter zu entfernen sind. Nur beim thermischen Abbau von Polymeren, bei dem nur sehr geringe Mengen an Feststoffen entstehen, kann ein Reaktor ohne Einrichtungen zur Förderung von Feststoff längere Zeit kontinuierlich betrieben werden. Beispielsweise ist aus der US-A-4,863,723 die kontinuierliche Herstellung von Hexamethylcyclotrisiloxan durch Erhitzen von füllstofffreien Organopolysiloxanen in einer Stahlblase bei gleichzeitigem Abdestillieren der gasförmigen Produkte bekannt.

Der größte Anteil der zur Wiederaufbereitung anfallenden Organopolysiloxane enthält Füllstoffe, wie Kieselsäuren. Ein kontinuierliches Verfahren zum thermischen Abbau von thermisch spaltbaren, Feststoff enthaltenden Polymeren, unter Bildung von gasförmigen Rohstoffen in einem Drehrohrofen ist in der Broschüre "Rohstoffliches Recycling von Shredderleichtfraktion-Rückständen aus der Altauto-Verwertung mit den Verfahren von Veba Oel durch Pyrolyse und Vergasung" der VDI-Bildungswerk GmbH und Veba Oel Technologie und Automatisierung GmbH (Mai 1994) beschrieben.
Ein Drehrohrofen, der für einen Durchsatz von 50 bis 100 kg/h an Organopolysiloxanen geeignet ist, weist eine beheizte Trommel mit einem Durchmesser von etwa 400 mm und einer Länge von etwa 4000 mm auf. Die Gesamtanlage ist 4000 mm lang, 4500 mm breit und 8500 mm hoch und erfordert ein eigenes Gebäude. Das Aufheizen des Ofens erfordert viel Zeit und Energie. Deshalb lohnt eine Inbetriebnahme nur für größere Chargen. Die Verweilzeiten der eingesetzten Stoffe im Ofen sind lang. Das Verfahren muß unter Luftausschluß durchgeführt werden, da die heißen Gase mit Sauerstoff reagieren und gegebenenfalls explodieren können. Die Dichtung an dem sich drehenden Ofen ist nicht einfach und erlaubt nicht die Anwendung von vermindertem Druck. Die beim thermischen Abbau zurückbleibenden Feststoffe neigen zum Verkrusten und setzen sich teilweise an der Ofenwand fest. Der Ofen muß deshalb regelmäßig abgestellt und gereinigt werden oder eine zusätzliche Einrichtung zur Reinigung der Ofenwände aufweisen.

Der vorliegenden Erfindung liegt die Aufgabe zugrunde, ein kontinuierliches Verfahren zum thermischen Abbau von Organopolysiloxanen und Organopolysiloxanen enthaltenden Polymeren bereitzustellen, welches auf wenig aufwendige Weise wiederverwendbare niedermolekulare Produkte liefert.

Gegenstand der Erfindung ist ein kontinuierliches Verfahren zum thermischen Abbau von Organopolysiloxanen und Organopolysiloxane enthaltenden Polieren unter Bildung von gasförmig anfallenden Produkten, bei dem die Organopolysiloxane und Organopolysiloxane enthaltenden Polymere in einer Wellenmaschine erhitzt werden.

Im Verfahren kommen Ein- oder Mehrwellenmaschinen, vorzugsweise Ein- und Zweiwellenmaschinen, insbesondere Einwellenmaschinen, deren Wellen sich im Gleich- oder Gegensinn drehen, wie Schneckenkneter, Extruder und Pilgerschrittwellenmaschinen zum Einsatz. Pilgerschrittwellenmaschinen werden auch als KO-Kneter oder als Buss-Kneter (Buss-Kneader) bezeichnet. Die Wellen der Wellenmaschinen können auch als Wendeln vorliegen.

Die Wellenmaschinen sind klein. Beispielsweise ist eine Pilgerschrittwellenmaschine, deren Welle 100 mm Durchmesser aufweist und die für einen Durchsatz von 40 bis 50 kg/h an Organopolysiloxanen geeignet ist, 1800 mm lang. Die Betriebstemperatur kann aufgrund des kleinen Volumens des Reaktionsraumes schnell erreicht werden. Die Verweilzeiten der eingesetzten Organopolysiloxane beträgt nur etwa 6 Minuten. Das Verfahren kann leicht unter Luftausschluß durchgeführt werden, da nur kleine Mengen an Schutzgas benötigt werden und leicht bei vermindertem Druck gearbeitet werden kann. Die Welle transportiert als Rückstand verbleibende Feststoffe aus der Maschine, so daß ein Verkrusten nicht stattfinden kann. Durch Einbringen von mechanischer Energie durch die Welle wird die Temperatur der thermisch abzubauenden Polymeren in der wellenmaschine erhöht. Zusätzlich wird durch das Ausbilden ständig neuer Oberflächen die Ausbeute an gasförmig anfallenden Produkten erhöht.

Beispiele für geeignete Organopolysiloxane sind flüssige und feste lineare und verzweigte Polymere, die organische Reste, beispielsweise Hydroxyl-, Vinyl- und SiH-Gruppen aufweisen, Siliconharze, unvulkanisierte Siliconkautschuke, wie bei Raumtemperatur vernetzende Ein- oder Zweikomponentenkautschuke, Flüssigkautschuke, heiß vernetzende Einkomponentenkautschuke und deren Vulkanisate.

Beispiele für Organopolysiloxane enthaltende Polymere sind Copolymere aus Organopolysiloxanen und organischen Polymeren, wie Ethylen-Propylen-Terpolymere (EPDM), Copolymere aus Organopolysiloxanen mit Polyurethan oder Fluorpolymeren oder Pfropfcopolymerisate aus Organopolysiloxanen mit Vinylpolymeren. Weitere Beispiele sind Mischungen aus Organopolysiloxanen mit organischen Polymeren wie Polyolefinen, Polyamiden, Polyimiden, Epoxydharzen, Polyoxyalkylenen und Polyurethanen.

Bei der Spaltung der besonders bevorzugten Vulkanisate von Siliconkautschuk entstehen vorwiegend Siloxanzyklen mit 3 bis 10 Siloxaneinheiten, wobei niedere Zyklen bevorzugt gebildet werden. Das erfindungsgemäße Verfahren eignet sich in besonderer Weise für füllstoffhaltige Siliconkautschukvulkanisate. Bei der thermischen Spaltung werden die flüchtigen Siloxane von den Feststoffen getrennt.

Beispiele für anorganische Füllstoffe sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen-, oder Zinkoxide bzw. deren Mischoxide, Bariumsulfat, Calciumcarbonat, Gips und Glaspulver; verstärkende Füllstoffe, also Füllstoffe mit einer BET-Oberfläche von mehr als 50 m²/g, wie pyrogen hergestellte Kieselsäure, gefällte Kieselsäure und Silicium-Aluminium-Mischoxide großer BET-Oberfläche.

Die genannten Füllstoffe, insbesondere Kieselsäuren, können hydrophobiert sein, beispielsweise durch die Behandlung mit Organosilanen bzw. -siloxanen oder -silazanen oder durch Verätherung von Hydroxylgruppen zu Alkoxygruppen. Die hydrophoben Eigenschaften der Füllstoffe bleiben nach der Durchführung des Verfahrens bestehen und zuvor hydrophile Füllstoffe werden in hydrophobe umgewandelt.

Die Füllstoffe können beispielsweise zur Herstellung neuer Polydimethylsiloxankautschuke verwendet werden. Die dabei erhaltenen Kautschuke können zu Vulkanisaten verarbeitet werden, die den eingesetzten Vulkanisaten vergleichbare Eigenschaften zeigen.

Den thermisch spaltbaren Polymeren werden gegebenenfalls die Spaltung fördernde Stoffe, wie Katalysatoren oder Promotoren zugesetzt. Beispielsweise können den Polymeren als Promotoren Wasser und/oder Ammoniak und als Katalysatoren Phosphor-Stickstoff-Chloride der ungefähren Summenformel PNCl₂ zugesetzt werden, die erhältlich sind durch Umsetzung von Phosphorpentachlorid mit Ammoniak. Derartige Verbindungen werden häufig als Phosphornitriddichlorid bezeichnet. Auch Toluol-4-sulfonsäure wirkt katalytisch zersetzend insbesondere in Kombination mit Wasser.

Das Verfahren wird in Abhängigkeit von dem zu spaltenden Polymeren bei vorzugsweise 350°C bis 650°C, insbesondere 400°C bis 550°C durchgeführt.

Das Verfahren kann bei Atmosphärendruck (10⁻¹ MPa) oder unter vermindertem Druck von beispielsweise 10⁻⁵ MPa bis Atmosphärendruck, insbesondere 10⁻⁴ MPa bis 5 x 10⁻² MPa durchgeführt werden.

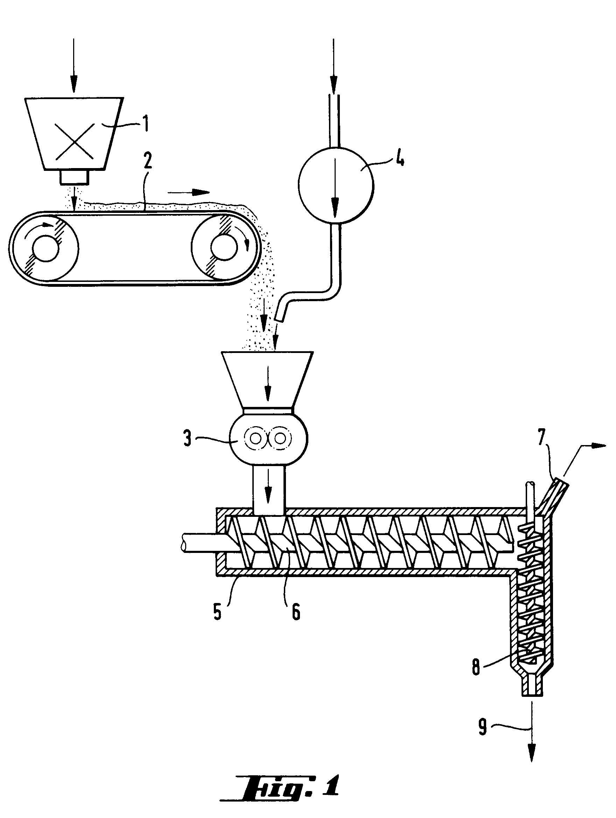

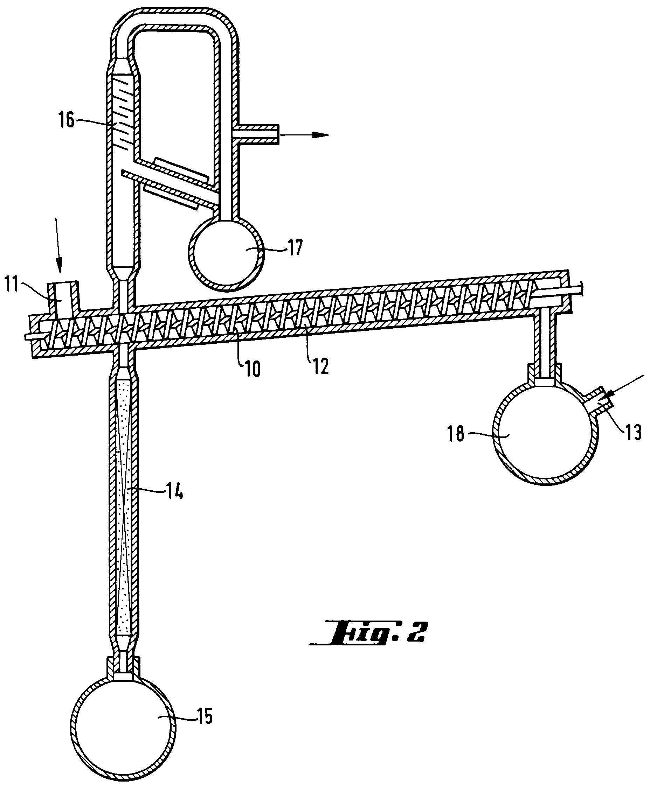

Nachstehend werden bevorzugte Ausführungsformen mittels der Figuren 1 und 2 erläutert:

### Figur 1

Vorzugsweise werden die thermisch spaltbaren Polymere in einer Zerkleinerungsvorrichtung (1) grob auf vorzugsweise Teilchengrößen von 0,5 bis 20 mm, insbesondere 1 bis 10 mm gemahlen.

Das gemahlene Gut wird vorzugsweise mittels einer Fördervorrichtung (2), beispielsweise einem Förderband in eine Dosiervorrichtung (3) gegeben. Die Dosiervorrichtung (3) kann beispielsweise aus Dosiertrichter und Dosierschnecke oder Zahnradpumpe aufgebaut sein. Der Dosiertrichter ist vorzugsweise mit Waage ausgestattet. Eine Zahnradpumpe ist bevorzugt, da sie beim Dosieren gegen verminderten Druck in der Wellenmaschine abdichten kann. Falls den spaltbaren Polymeren die Spaltung fördernde Stoffe zugesetzt werden, können diese vorzugsweise in der Dosiervorrichtung (3) zugegeben werden.

Vorzugsweise werden feste, nicht thermoplastische Polymere mit Flüssigkeiten (4), wie flüssigen thermisch spaltbaren Polymeren und/oder organischen Lösungsmitteln, welche vorzugsweise bei der thermischen Spaltung anfallen, in der Dosiervorrichtung (3), vorzugsweise in einem Dosiertrichter vermischt. Vorzugsweise werden die festen Polymere mit dünnflüssigen Polymeren und/oder organischen Lösungsmitteln gequollen. Die gut dosierbare, meist plastische Masse wird dann vorzugsweise über eine Zahnradpumpe insbesondere gegen verminderten Druck in die Wellenmaschine dosiert.

Beispiele für im Verfahren verwendbare organische Lösungsmittel sind Ether, wie Dioxan, Tetrahydrofuran, Diethylether, Diethylenglycoldimethylether; Ester, wie Essigsäureethylester; Kohlenwasserstoffe, wie Pentan, n-Hexan, Hexan-Isomerengemische, Heptan, Oktan, Waschbenzin, Petrolether, Toluol, Xylole; Ketone, wie Aceton, Methylethylketon, Methyl-isobutylketon; Siloxane, wie Hexamethyldisiloxan und cyclische Siloxanen aus 3 bis 8 Dimethylsiloxanyleinheiten, insbesondere Hexamethylcyclotrisiloxan und Octamethylcyclotetrasiloxan oder Gemische dieser Lösungsmittel.

Lösungsmittel oder Lösungsmittelgemische mit einem Siedepunkt bzw. Siedebereich von bis zu 200°C, vorzugsweise bis zu 150°C, insbesondere bis zu 100°C bei 10⁻¹ MPa sind bevorzugt.

Ebenfalls bevorzugt ist der Einsatz von verunreinigten Lösungsmitteln, wie Lösungsmittelabfälle oder beim thermischen Abbau von Polymeren gewonnene Flüssigkeitsfraktionen.

Beispielsweise können feste Organopolysiloxane, wie Siliconkautschuk mit siliciumorganischen Ölen und dünnflüssigen Siloxanen, wie den als Produkt des Verfahrens erhältlichen cyclischen Siloxanen aus 3 bis 7 Dimethylsiloxanyleinheiten im Dosiertrichter vermischt werden. Vorzugsweise werden die festen Siloxane mit den dünnflüssigen Siloxanen gequollen.

Die in den Reaktionsraum der Wellenmaschine (5) dosierten thermisch spaltbaren Polymere werden mittels einer oder mehrerer Wellen (6) transportiert und mechanisch bearbeitet. Dabei werden die spaltbaren Polymere auf die im Verfahren erforderliche Temperatur gebracht. Vorzugsweise sind im Reaktionsraum der Wellenmaschine (5) Dosiermöglichkeiten für Schutzgas, wie Stickstoff oder Argon und die Spaltung fördernde Stoffe vorhanden.

Die gasförmig anfallenden Produkte werden über eine Leitung (7) abgezogen, vorzugsweise in einer Kondensiervorrichtung kondensiert oder durch Absorption dem Gasstrom entzogen.

Der beim Verfahren im Reaktionsraum der Wellenmaschine (5) anfallende Feststoff wird vorzugsweise über eine Austragswelle (8) aus der Wellenmaschine (5) über die Austragsöffnung (9) entfernt. Vorzugsweise ist an der Austragsöffnung (9) ein an ein Vakuumsystem angeschlossenes Auffanggefäß angebracht, damit das Verfahren unter vermindertem Druck durchgeführt werden kann.

### Figur 2

Anstelle von Schnecken können auch Wendeln (10) den Transport der durch die Eintragsöffnung (11) dosierten Polymeren durch den beheizten Reaktionsraum (12) übernehmen. In diesem Fall ermöglicht das größere freie Volumen im Reaktionsraum (12), daß die während des thermischen Abbaus gebildeten gasförmigen cyclischen Siloxane durch das Einleiten von Schutzgas durch eine Öffnung (13) in der Nähe des der Eintragsöffnung (11) entgegengesetzten Endes der Wendel (10) im Gegenstrom in Richtung der Eintragsöffnung (11) befördert werden können. Dies bietet den Vorteil, daß der verbleibende Füllstoff nahezu vollständig von Organopolysiloxanen befreit wird.

Vorzugsweise wird der Reaktionsraum (12) derart geneigt angeordnet, daß das Ende mit der Eintragsöffnung (11) tiefer liegt. Vorzugsweise wird in der Nähe der Eintragsöffnung (11) stromabwärts in Transportrichtung der Wendel (10) ein beheizter Reaktionsraum (14) senkrecht zum beheizten Reaktionsraum (12) angeordnet. Der beheizte Reaktionsraum (14) enthält vorzugsweise Füllkörper. In diesen Reaktionsraum (14) fließen flüssige Stoffe, die sich bei der thermischen Spaltung gebildet haben oder frei gesetzt worden sind. Die in den flüssigen Stoffen vorhandenen Siloxanbestandteile werden in cyclische Siloxane gespalten. Schwerflüchtige Verunreinigungen werden vorzugsweise in einer Vorlage (15) aufgefangen und abgetrennt.

Die gebildeten gasförmigen cyclischen Siloxane werden vorzugsweise in der Nähe der Eintragsöffnung (11) stromabwärts in Transportrichtung der Wendel (10) abgezogen. Die cyclischen Siloxane werden vorzugsweise in einer Kondensiervorrichtung (16) verflüssigt und vorzugsweise in einer Vorlage (17) aufgefangen. Leichter flüchtige Verunreinigungen, wie Ethylen werden abgezogen.
Wenn bei der thermischen Spaltung flüchtige saure Verbindungen freigesetzt werden, versetzt man vorzugsweise die cyclischen Siloxane in der Vorlage (17) mit Säurefängern, wie Calciumoxid, um eine Polymerisation zu vermeiden.

Der Füllstoff wird durch die Wendel (10) transportiert und beispielsweise in einer Vorlage (18) aufgefangen.

Die vorstehenden bei den Figuren 1 und 2 beschriebenen Merkmale können beliebig kombiniert werden und sind nicht auf die Ausführungsform der bestimmten Figur beschränkt.

In den nachfolgenden Beispielen sind, falls jeweils nicht anders angegeben,
a) alle Mengenangaben auf das Gewicht bezogen;
b) alle Drücke 10⁻¹ MPa (abs.);
c) alle Temperaturen 25°C.

### Beispiele

### Beispiel 1 (erfindungsgemäß; Vorrichtung gemäß Figur 1)

50 kg eines heiß vernetzten Polydimethylsiloxankautschukvulkanisats wurde mit 50 kg des bei der thermischen Spaltung erhaltenen Kondensats, einem nachstehend in Tabelle I beschriebenen Gemisch cyclischer Siloxane vermischt. Dieses Gemisch wurde aus einer Dosiervorrichtung (3), bestehend aus einem mit Wägevorrichtung ausgerüsteten Dosiertrichter und einer Zahnradpumpe in eine Einwellenmaschine (5) mit einem Durchsatz von 15 kg/Stunde dosiert. Die Verweilzeit im Reaktionsraum bei 450°C betrug 6 Minuten. Als Schutzgas wurde angefeuchteter Stickstoff eingeleitet. Bei einem Druck von 2,5 x 10⁻² MPa wurden die entstehenden flüchtigen Siloxane über die Leitung (7) abgezogen und in einem Kühler auskondensiert. Der verbliebene Feststoff wurde in einem Gefäß aufgefangen.
Es wurden insgesamt 70,85 kg Kondensat erhalten; dies entspricht nach Abzug der eingesetzten 50 kg Kondensat 20,85 kg (41,7 % bezogen auf eingesetztes Kautschukvulkanisat). Die Zusammensetzung des Kondensats ist in Tabelle I angegeben. An festem Rückstand wurden 26,2 kg (52,4 % bezogen auf eingesetztes Kautschukvulkanisat) erhalten. 2,95 kg (5,9 % bezogen auf eingesetztes Kautschukvulkanisat) gingen über das Abgas verloren.

**Tabelle I**

| Zusammensetzung des Kondensats: | |
|---|---|
| Hexamethylcyclotrisiloxan | 63,5 % |
| Octamethylcyclotetrasiloxan | 20,3 % |
| Dekamethylcyclopentasiloxan | 4,4 % |
| Höhere cyclische Siloxane | 3,6 % |
| Sonstige Polysiloxane | 2,9 % |
| Nicht identifizierte Produkte | 5,3 % |

### Beispiel 2 (nicht erfindungsgemäß)

In einem Labordrehrohrofen HT 11 der Pleq^{R}Plant und Equipment Engineering GmbH, Köln wurden 4 kg des gleichen heiß vernetzten Polydimethylsiloxankautschukvulkanisats wie in. Beispiel 1 eingesetzt. Die Verweilzeit im Ofen bei 500°C betrug 1,2 Stunden. Als Schutzgas wurde Stickstoff eingesetzt, die Anlage wurde bei Atmosphärendruck betrieben. Die entstehenden Gase wurden in einem Kühler auskondensiert.
Es wurden 1195 g Kondensat (29,9 %) erhalten.
An festem Rückstand wurden 2418 g (60,4 %) erhalten. 387 g (9,7 %) gingen über das Abgas verloren.
Die thermisch spaltbaren Bestandteile des Kautschukvulkanisats wurden nur zu etwa 60 % gespalten. Die Ursache dafür ist die mangelnde Dichtigkeit des Drehrohrofens, aufgrund derer Luft eindrang, sowie die unzureichende Durchmischung und der geringe mechanische Aufschluß des Kautschukvulkanisats im Drehrohrofen.

### Beispiele 3 und 4 (erfindungsgemäß)

In Beispiel 1 beschriebenes Polydimethylsiloxankautschukvulkanisat wurde in einer in Figur 2 beschriebenen Vorrichtung in die Eintragsöffnung (11) dosiert. Durch die Öffnung (13) wurde Stickstoff als Inertgas im Gegenstrom eingeführt. In der Vorlage (17) wurde das Kondensat aufgefangen. In der Vorlage (18) wurde der feste Rückstand gesammelt.

| Versuchseinstellungen | Beisp. 3 | Beisp. 4 |
|---|---|---|
| Temperatur des horiz. Ofens am Reaktionsraum (12) | 600°C | 600°C |
| Stickstoffstrom | 5 l/h | 20 l/h |
| Katalysator | NH₃/Wasser | NH₃ |
| Temperatur des vert. Ofens am Reaktionsraum (14) | 500°C | 300°C |
| Durchsatz | 150 g/h | 150 g/h |

| Ergebnisse | | |
|---|---|---|
| Kondensat (in % der Einwaage) | 47 % | 37 % |
| Leichtflüchtige Anteile (in % der Einwaage) | 12 % | 19 % |
| Fester Rückstand (in % der Einwaage) | 41 % | 41 % |
| gespaltener Anteil des Organopolysiloxans | 100 % | 99 % |
| Hochsiedende Anteile (in % der Einwaage) | <0,1 % | 3 % |

| Kondensatzusammensetzung (nach thermischer Spaltung) | | |
|---|---|---|
| Hexamethylcyclotrisiloxan | 37 % | 42 % |
| Octamethylcyclotetrasiloxan | 25 % | 23 % |
| Cyclische Siloxane mit 5 bis 7 Dimethylsiloxaneinheiten | 12 % | 12 % |
| Sonstige Polysiloxane | 26 % | 23 % |

| Kondensatzusammensetzung (nach 4 Wochen) | | |
|---|---|---|
| Hexamethylcyclotrisiloxan | 46 % | 32 % |
| Octamethylcyclotetrasiloxan | 26 % | 26 % |
| Cyclische Siloxane mit 5 bis 7 Dimethylsiloxaneinheiten | 11 % | 13 % |
| Sonstige Polysiloxane | 17 % | 29 % |

| Kondensatzusammensetzung (nach 4 Wochen über CaO) | | |
|---|---|---|
| Hexaethylcyclotrisiloxan | 49 % | 53 % |
| Octamethylcyclotetrasiloxan | 26 % | 21 % |
| Cyclische Siloxane mit 5 bis 7 Dimethylsiloxaneinheiten | 11 % | 11 % |
| Sonstige Polysiloxane | 14 % | 15 % |

Die Kondensatzusammensetzung wurde mittels Gelpermeationschromatographie bestimmt, d.h., die Zusammensetzung gilt nur für die bei der Bestimmung löslichen Anteile.

Der Vergleich zwischen Beispiel 3 und 4 zeigt, daß der Hochsiederanteil, der neben Siloxanen die Verunreinigungen enthält, durch die Temperatur des vertikalen Reaktionsraums (14) deutlich abgesenkt werden kann, d.h., die Menge an zu entsorgendem Material wird reduziert.

### Liste der Bezugszeichen

- (1): Zerkleinerungsvorrichtung
- (2): Fördervorrichtung
- (3): Dosiervorrichtung
- (4): Flüssigkeiten
- (5): Wellenmaschine
- (6): Welle
- (7): Leitung
- (8): Austragswelle
- (9): Austragsöffnung
- (10): Wendel
- (11): Eintragsöffnung
- (12): Reaktionsraum
- (13): Öffnung für Schutzgas
- (14): Reaktionsraum
- (15): Vorlage für schwerflüchtige Verunreinigungen
- (16): Kondensiervorrichtung
- (17): Vorlage für cyclische Siloxane
- (18): Vorlage für Füllstoffe

## Patentansprüche

1. Kontinuierliches Verfahren zum thermischen Abbau von Organopolysiloxanen und Organopolisiloxane enthaltenden Polymeren unter Bildung von gasförmig anfallenden Produkten, bei dem die Polymere in einer Wellenmaschine (5) erhitzt werden.

2. Verfahren nach Anspruch 1, bei dem die Organopolysiloxane und Organopolisiloxane enthaltenden Polymere mit die Spaltung fördernden Stoffen versetzt werden.

3. Verfahren nach Anspruch 1 oder 2, bei dem die Organopolysiloxane und Organopolysiloxane enthaltenden Polymere vor der thermischen Spaltung in einer Zerkleinerungsvorrichtung (1) auf Teilchengrößen von 0,5 bis 20 mm gemahlen werden.

4. Verfahren nach einem der Ansprüche 1 bis 3, bei dem unter vermindertem Druck gearbeitet wird.
